# EUROPEAN PATENT APPLICATION

(11) **EP 4 361 799 A1**
(43) Date of publication of application: **01.05.2024**
(21) Application number: 23206888.2
(22) Date of filing: 31.10.2023
(51) Int. Cl.: G06F 8/65, G06F 8/71, G06F 9/445

(54) **INFORMATION PROCESSING APPARATUS, INFORMATION PROCESSING METHOD, AND STORAGE MEDIUM**

(30) Priority: 31.10.2022 JP 2022174743
(71) Applicant: CANON KABUSHIKI KAISHA, Tokyo 146-8501 (JP)
(72) Inventor: TAGASHIRA, Nobuhiro, Tokyo, 146-8501 (JP); EGUCHI, Takami, Tokyo, 146-8501 (JP); KAWAZU, Ayuta, Tokyo, 146-8501 (JP); MINETOMO, Yuki, Tokyo, 146-8501 (JP)
(74) Representative: Canon Europe Limited

(57) **Abstract**

An information processing apparatus includes a storage unit configured to store a setting value for each of a plurality of security setting items, an update unit configured to perform update processing on software stored in the information processing apparatus, and a determination unit configured to determine a setting value of a setting item that is newly added or changed in a specification of the software through the update processing, based on the setting values stored in the storage unit.

## Description

### BACKGROUND OF THE INVENTION

### Field of the Invention

The present invention relates to an information processing apparatus that sets a setting value of a security setting item, an information processing method, and a storage medium.

### Description of the Related Art

A personal computer (PC), a multi-function peripheral (MFP), and the like are generally known as information processing apparatuses. In these information processing apparatuses, software (firmware and a control program) is updated after shipment, in general. The update of software is performed not only to correct a bug, but also to change specifications and/or add a function.

In a case where the software is updated, an appropriate setting for each of various setting items regarding the update of the software is to be realized. For a setting item that is not changed before and after the update of the software, it is conceivable to inherit a setting value without a change. Meanwhile, in response to the change in the specifications and/or the addition of the function, there is a case where an existing setting item is deleted, a case where a setting item is newly added, or the like. As for the newly added setting item, since there is no setting value before the update, it is conceivable to utilize a predetermined value (default value).

According to Japanese Patent No. 5843637, setting values before and after the update of software for a setting item added by the update of the software, a setting item deleted by the update of the software, and a setting item changed by the update of the software are recorded in association with software update processing. Displaying the setting items and the setting values that are recorded when a specific software update history is selected allows the user to check information regarding the change in the setting values with the update of the software.

According to Japanese Patent No. 5843637, a difference between a setting value before the update of the software and a predetermined value after the update of the software is displayed, thus implementing the issuance of an alert regarding settings. However, with only the issuance of the alert, the alert may be ignored, which leads to an operation with a predetermined value. For a setting item newly added by the update of the software, the operation is performed also with the predetermined value, in ordinary cases. In consideration of the presence of a predetermined value that places emphasis on usability and a predetermined value that assumes a general-purpose environment, there is a possibility that use of a predetermined value for a setting item regarding security purposes may give rise to an issue. For example, there is a case where a predetermined value that prioritizes usability and disables a security function is used, and there is a case where an assumed environment is different from the actual environment and a predetermined value does not contribute to the improvement of security.

For a setting item that is not changed before and after the update of the software, it is also conceivable to inherit setting values before the update of the software. In a case where settings regarding security are inherited without a change, however, there is a possibility that a compromised security function is inherited and used, which may be a cause of vulnerability.

Furthermore, since the settings regarding security are hard to understand, it is considered that the user has a difficulty in determining appropriate setting values with only the presentation of the difference.

The present invention is directed to appropriate setting of setting values of a security setting item in a case where a change is made to specifications and/or a function with the update of software.

### SUMMARY OF THE INVENTION

According to a first aspect of the present invention, there is provided an information processing apparatus as specified in claims 1 to 5. According to a second aspect of the present invention, there is provided an information processing method as specified in clam 6. According to a third aspect of the present invention, there is provided a non-transitory storage medium storing a program causing an information processing apparatus to execute an information processing method as specified in clam 7.

Further features of the present invention will become apparent from the following description of embodiments with reference to the attached drawings. Each of the embodiments of the present invention described below can be implemented solely or as a combination of a plurality of the embodiments or features thereof where necessary or where the combination of elements or features from individual embodiments in a single embodiment is beneficial.

### BRIEF DESCRIPTION OF THE DRAWINGS

Fig. 1 is a system block diagram illustrating a connection mode for a multi-function peripheral (MFP) and a personal computer (PC).
Fig. 2 is a block diagram illustrating a physical configuration of a controller unit of the MFP.
Fig. 3 is a block diagram illustrating a configuration of software executed in the controller unit of the MFP.
Fig. 4 is a screen layout diagram relating to a menu.
Fig. 5 is a screen layout diagram relating to settings.
Fig. 6 is a screen layout diagram relating to administrator authentication.
Fig. 7 is a screen layout diagram relating to security settings.
Figs. 8A and 8B each illustrate an example of setting items and setting values.
Fig. 9 is a flowchart for execution of processing according to a first embodiment.
Fig. 10 illustrates a second example of setting items and setting values.
Fig. 11 is a screen layout diagram relating to confirmation of update processing.
Figs. 12A and 12B each illustrate a third example of setting items and setting values.
Figs. 13A and 13B each illustrate a fourth example of setting items and setting values.
Fig. 14 is a flowchart for execution of processing according to a second embodiment.

### DESCRIPTION OF THE EMBODIMENTS

A first embodiment of the present invention will be described below with reference to the accompanying drawings. In the present embodiment, a description will be provided of processing for determining appropriate setting values when a change is made to specifications and/or a function along with update of software. The present embodiment is described using a multi-function peripheral (MFP) as an example, but the present invention relates to a technique that is also applicable to a freely-selected information processing apparatus, in addition to the MFP.

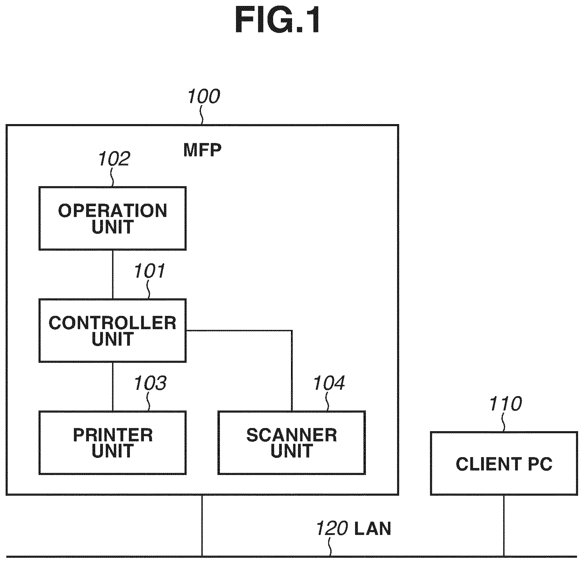

Fig. 1 is a system block diagram illustrating a connection mode in which an MFP 100 according to the present invention is connected to a client personal computer (PC) 110. The MFP 100 and the client PC 110 are connected to each other via a local area network (LAN) 120. The MFP 100 includes an operation unit 102 that performs input from and output to a user. The MFP 100 includes a printer unit 103 that outputs electronic data onto a paper medium. The MFP 100 includes a scanner unit 104 that scans the paper medium and that converts a scanned image into electronic data. The operation unit 102, the printer unit 103, and the scanner unit 104 are connected to a controller unit 101, and implement a function as the MFP 100 under control of the controller unit 101. The client PC 110 performs processing, such as transmission of a print job to the MFP 100.

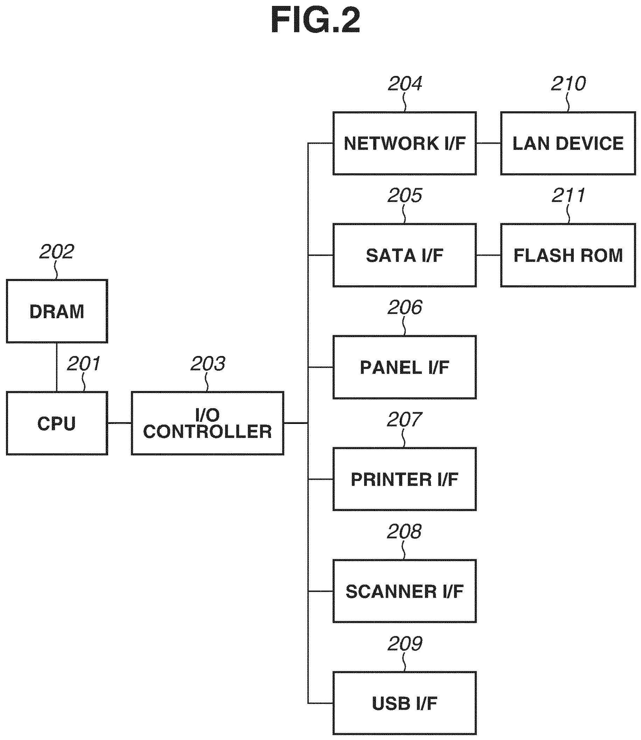

Fig. 2 is a block diagram illustrating a physical configuration of the controller unit 101 of the MFP 100. A central processing unit (CPU) 201 performs principal calculation processing in the controller unit 101. The CPU 201 is connected to a dynamic random access memory (DRAM) 202 via a bus. The DRAM 202 is used by the CPU 201 as a work memory to temporarily store processing target data and program data indicating an arithmetic instruction in a process of calculation performed by the CPU 201. The CPU 201 is connected to an input/output (I/O) controller 203 via the bus. The I/O controller 203 performs input from and output to various devices in accordance with an instruction provided by the CPU 201. A Serial Advanced Technology Attachment (SATA) interface (I/F) 205 is connected to the I/O controller 203, and a flash read-only memory (ROM) 211 is further connected to the SATA I/F 205. This component is described as the flash ROM 211, but the component is not limited to a flash ROM, and may be a non-volatile storage, such as a hard disk drive (HDD). The CPU 201 uses the flash ROM 211 to permanently store a program to implement functions of the MFP 100, various setting data, and a document file. A network I/F 204 is connected to the I/O controller 203, and a LAN device 210 is further connected to the network I/F 204. The CPU 201 controls the LAN device 210 via the network I/F 204, thus implementing communication on the LAN 120. A panel I/F 206 is connected to the I/O controller 203, so that the CPU 201 implements input from and output to the operation unit 102 for the user via the panel I/F 206. A printer I/F 207 is connected to the I/O controller 203, so that the CPU 201 implements output processing onto the paper medium utilizing the printer unit 103 via the printer I/F 207. A scanner I/F 208 is connected to the I/O controller 203, so that the CPU 201 implements scan processing of scanning a document utilizing the scanner unit 104 via the printer I/F 207. A universal serial bus (USB) I/F 209 is connected to the I/O controller 203, so that the CPU 201 controls a freely-selected apparatus that is connected to the USB I/F 209.

In a case where a copy function is implemented, the CPU 201 loads program data from the flash ROM 211 into the DRAM 202 via the SATA I/F 205. The CPU 201 detects a copy instruction from the user to the operation unit 102 via the panel I/F 206 in accordance with the program loaded into the DRAM 202. In response to detecting the copy instruction, the CPU 201 receives a document, as electronic data, from the scanner unit 104 via the scanner I/F 208 and stores the electronic data in the DRAM 202. The CPU 201 performs, on image data stored in the DRAM 202, color conversion processing or the like appropriate for output. The CPU 201 transfers the image data stored in the DRAM 202 to the printer unit 103 via the printer I/F 207, and performs output processing on the paper medium.

In a case where page description language (PDL) print is performed, the client PC 110 provides a print instruction via the LAN 120. The CPU 201 loads program data from the flash ROM 211 via the SATA I/F 205 into the DRAM 202, and detects the print instruction via the network I/F 204 in accordance with a program loaded into the DRAM 202. In response to detecting a PDL transmission instruction, the CPU 201 receives print data via the network I/F 204, and saves the print data in the flash ROM 211 via the SATA I/F 205. When the saving of the print data is completed, the CPU 201 develops the print data saved in the flash ROM 211 into the DRAM 202 as image data. The CPU 201 performs color conversion processing or the like appropriate for output on image data stored in the DRAM 202. The CPU 201 transfers the image data stored in the DRAM 202 to the printer unit 103 via the printer I/F 207, and performs output processing on the paper medium.

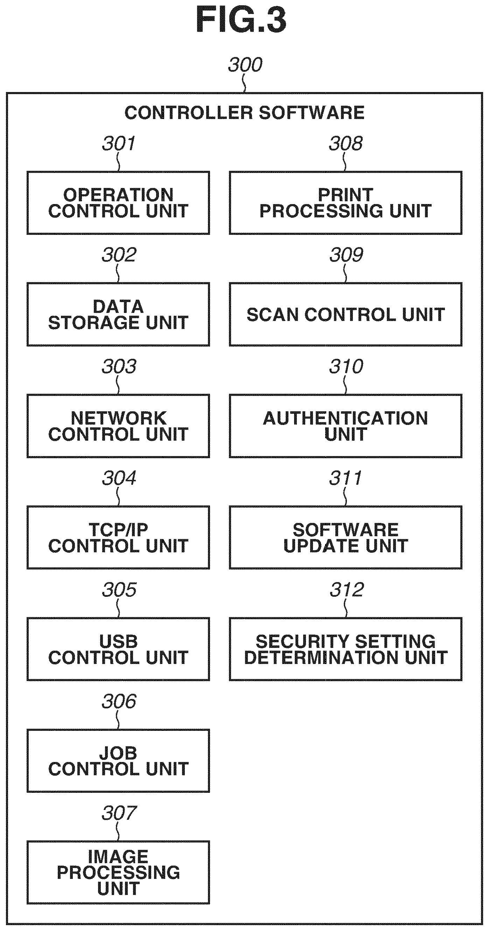

Fig. 3 is a block diagram illustrating a configuration of software to be executed in the controller unit 101 of the MFP 100. The description of system software, such as a basic input/output system (BIOS) and an operating system (OS), is omitted here. All of software to be executed in the controller unit 101 is executed by the CPU 201.

The CPU 201 loads controller software 300 stored in the flash ROM 211 into the DRAM 202 and thereafter executes the controller software 300.

An operation control unit 301 displays a screen image for the user on the operation unit 102, detects a user operation, and executes processing in association with a screen component, such as a button, which is displayed on a screen.

A data storage unit 302 stores data in the flash ROM 211 and reads out the data in response to a request from another control unit. For example, in a case where the user wants to make a change to a certain apparatus setting, the operation control unit 301 detects details input to the operation unit 102 by the user, and saves the details in the flash ROM 211 as setting values in response to a request from the operation control unit 301.

A network control unit 303 makes network settings, such as a setting of Internet Protocol (IP) address, to a Transmission Control Protocol/Internet Protocol (TCP/IP) control unit 304 at the time of start-up of the system and detection of a change in settings in accordance with setting values stored in the data storage unit 302.

The TCP/IP control unit 304 performs processing of transmitting and receiving network packets via the network I/F 204 in accordance with an instruction from another control unit.

A USB control unit 305 controls the USB I/F 209 to control a freely-selected apparatus that is connected via a USB.

A job control unit 306 controls execution of a job in accordance with an instruction from another control unit.

An image processing unit 307 processes image data into a format appropriate for each intended use in accordance with an instruction from the job control unit 306.

A print processing unit 308 prints an image onto a paper medium via the printer I/F 207 in accordance with an instruction from the job control unit 306 and outputs the result.

A scan control unit 309 scans a placed document via the scanner I/F 208 in accordance with an instruction from the job control unit 306. For example, in a case where the copy function is executed, the operation control unit 301 detects a request for starting the copy function and instructs the job control unit 306 to execute copy. The job control unit 306 instructs the scan control unit 309 to scan the document and acquires a scanned image. The job control unit 306 instructs the image processing unit 307 to convert the scanned image into a format appropriate for print. The job control unit 306 instructs the print processing unit 308 to output a result of copy.

An authentication unit 310 performs processing of determining whether an operator is an administrator with respect to an operation that requires an administrative right.

A software update unit 311 updates a program file included in the controller software 300 in an installation environment after shipment. Update processing that is performed by the software update unit 311 can be further classified depending on an acquisition destination of an update program file. There is a method of acquiring the update program file via a network of the TCP/IP control unit 304, and there is a method of acquiring the update program file from a local storage, represented by a USB memory, via the USB control unit 305. In the present invention, the former is referred to as remote update, and the latter is referred to as local update. In a case of the remote update, the update program file is acquired from a distribution server or the like via the network. In a case of the local update, the update program file is to be preliminarily prepared in a local storage, such as the USB memory. For example, there is a method in which the USB memory is connected to the client PC 110 and the update program file is copied from the client PC 110 to the USB memory. Various methods can be assumed, for example, a method in which a vendor of the MFP 100 prepares a USB memory that holds the update program file and provides the update program file to the user. The update of the controller software 300 is not only to correct a bug of software, but also to change specifications of the MFP 100, add a new function, and delete an existing function.

When the controller software 300 is updated by the software update unit 311, a security setting determination unit 312 determines new setting values for the apparatus which are saved in the data storage unit 302. It can be assumed that the number of setting items increases with the addition of a new function, and it can also be assumed that the number of setting items decreases with the deletion of an existing function. It can also be assumed that the number of selection options for settings values increases or decreases with the change in the specifications of the MFP 100. In response to these cases, the security setting determination unit 312 determines a new setting value based on setting values saved before the update of the controller software 300 and predetermined setting values (predetermined values) that can be acquired at the time of the update of the controller software 300. Details of a determination method will be described below.

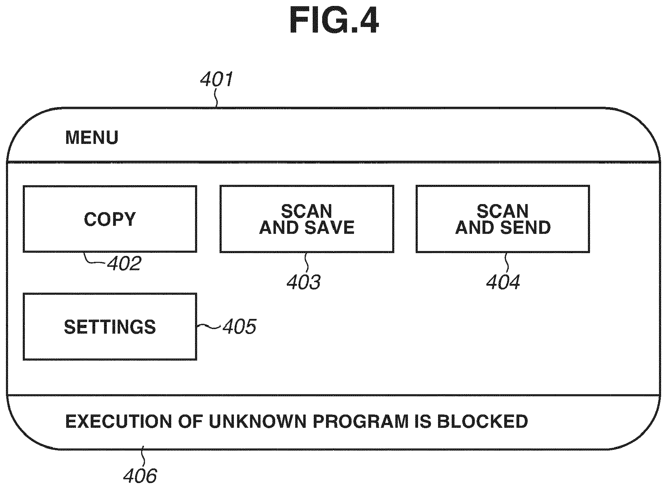

Fig. 4 illustrates a menu screen 401 that is displayed on the operation unit 102, and that is used by the user to instruct execution of various functions of the MFP 100. A button 402 is used by the user to instruct the copy function. A button 403 is used by the user to instruct a scan and save function. A button 404 is used by the user to instruct a scan and send function. A button 405 is utilized by the user to instruct a change in apparatus settings. Pressing the button 405 enables display of a setting screen 501. Various messages for the user in response to events that occur during the operation of the MFP 100 are displayed in a display region 406.

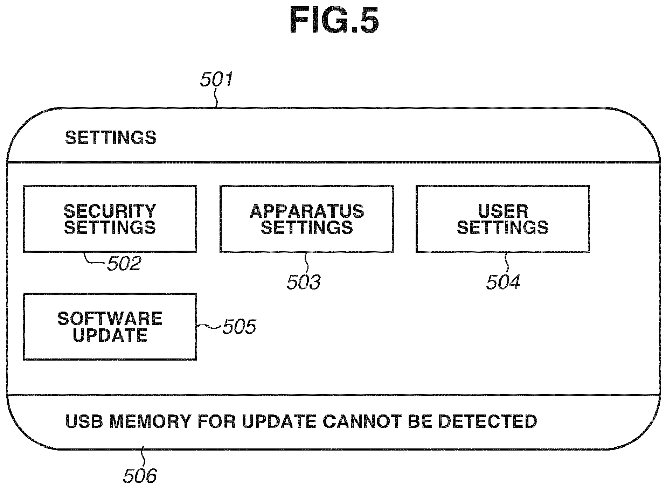

Fig. 5 illustrates the setting screen 501 that is displayed on the operation unit 102 and is used by the user to provide instructions for various settings. The setting screen 501 includes no specific setting item, and serves as an intermediate layer that guides the user to detailed setting items. Pressing a button 502 enables display of a security setting screen 701. Pressing a button 503 enables display of an apparatus setting screen, which is not illustrated. Pressing a button 504 enables display of a user setting screen, which is not illustrated. Pressing a button 505 enables start of update of software. Various messages for the user in response to events that occur during the operation of the MFP 100 are displayed in a display region 506.

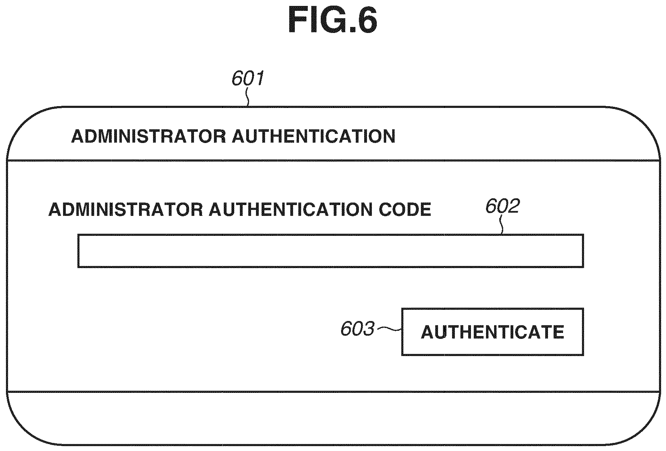

Fig. 6 illustrates an administrator authentication screen 601 that is displayed on the operation unit 102 and is used by the user to enter an administrator authentication code. The administrator authentication screen 601 is displayed prior to execution of a function that requires the administrative right, and is used to check whether an operator has the administrative right. For example, the administrator authentication screen 601 is displayed before display of the security setting screen 701 or after pressing of the button 505 and before update of software. A region 602 is used by the user to enter the administrator authentication code, and a button 603 is used to start checking of the administrator authentication code entered in the region 602. The administrator authentication code is checked by the authentication unit 310. If the authentication succeeds, the authentication unit 310 executes processing that requires the administrative right. If the authentication fails, the authentication unit 310 stops execution of the processing that requires the administrative right.

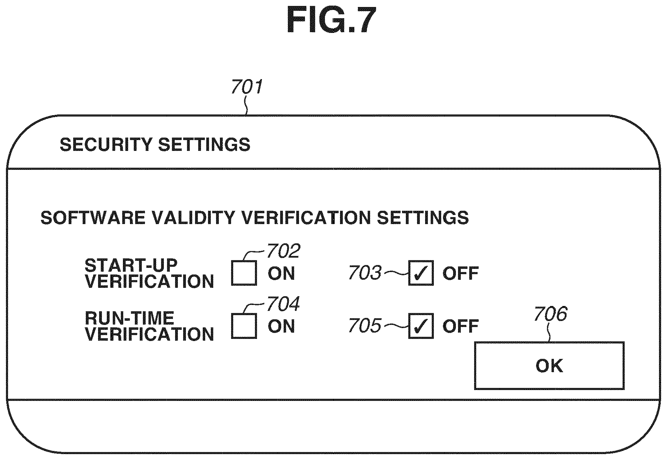

Fig. 7 illustrates the security setting screen 701, and is used to make security settings in the MFP 100. For example, in a case where a start-up verification 702 is selected, a start-up verification function for verifying integrity of the controller software 300 is enabled at the system activation. In a case where a run-time verification 704 is selected, a run-time verification function for verifying integrity of software to be executed is enabled at the software execution. When a button 706 is pressed, a selection state of the security setting screen 701 is stored in a data storage unit 302 as the apparatus settings. Since software verification processing of each of the start-up verification function and the run-time verification function requires calculation time for verification, an operation speed of the MFP 100 lowers in comparison with a case where the verification is not executed. In other words, the security and the processing performance have a trade-off relationship. The administrator is to make settings in consideration of an operation, an installation policy, and a level of user's satisfaction. The MFP 100 is a multi-user device, but the security setting screen 701 can be operated only by the operator who has the administrative right. All users are influenced by the settings, but it is only the administrator who makes the settings.

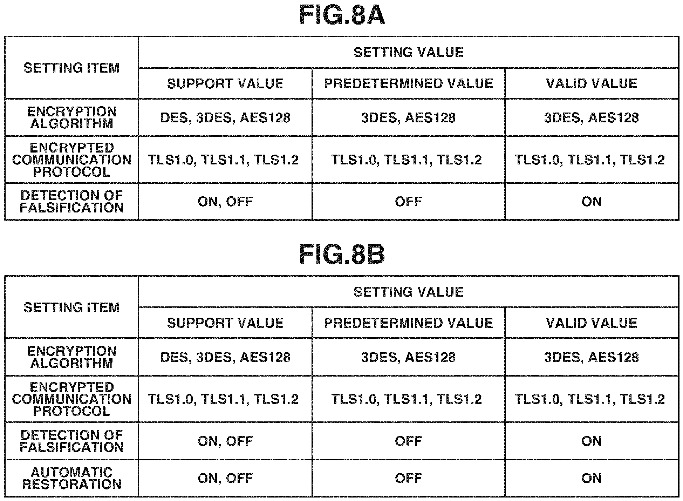

Figs. 8A and 8B each illustrate an example of setting items and setting values. A setting item and setting values are in association with each other, and can be indicated by a table as illustrated in Fig. 8A. The setting values corresponding to respective setting items include a support value, a predetermined value, and a valid value. The support value is a settable value and has a plurality of continuous or discrete values. The predetermined value is a default value, and has a single support value or a plurality of support values. The valid value is a setting value that is valid in the MFP 100, and has a single support value or a plurality of support values. The support value and the predetermined value are preliminarily set in the MFP 100. The valid value is the same as the predetermined value in a state where the user has not changed the valid value, and is a value set by the user in a state where the user has changed the valid value. For example, the user is allowed to select the valid value from support values through the setting screen 501 illustrated in Fig. 5 or the security setting screen 701 illustrated in Fig. 7.

Details of Fig. 8A are now described. Initially, a setting item "ENCRYPTION ALGORITHM" in Fig. 8A identifies a name of an encryption algorithm as a setting value. It is found from the support values thereof that the MFP 100 has functions of "DES, 3DES, and AES 128" regarding the "ENCRYPTION ALGORITHM", and "DES, 3DES, and AES 128" are settable. It is found from the predetermined values thereof that, in the MFP 100, the functions of "3DES and AES128" regarding the "ENCRYPTION ALGORITHM" are enabled by default, and the function of "DES" is disabled by default. It is found from the valid values thereof that, in the MFP 100, the functions of "3DES and AES128" regarding the "ENCRYPTION ALGORITHM" are currently enabled, and the function of "DES" is currently disabled. A setting item of "ENCRYPTED COMMUNICATION PROTOCOL" identifies an encrypted communication protocol identifier including a name and version of the encrypted communication protocol as setting values. It is found from the support values thereof that the MFP 100 has functions of "TLS1.0, TLS1.1, and TLS1.2", and "TLS1.0, TLS1.1, and TLS1.2" are settable. It is found from the predetermined values thereof that the functions of "TLS1.0, TLS1.1, and TLS 1.2" are enabled by default. It is found from the valid values thereof that the functions of "TLS1.0, TLS1.1, and TLS1.2" are enabled. A setting item of "DETECTION OF FALSIFICATION" identifies enable "ON" or disable "OFF" as a setting value. It is found from support values that the MFP 100 includes "ON" and "OFF", and "ON" and "OFF" are settable. It is found from a predetermined value that "OFF" is set. It is found from a valid value that "ON" is set. There is a case where the predetermined value and the valid value are the same, and there is a case where the predetermined value and the valid value are different. In the case where the predetermined value and the valid value are different, it can be assumed that the user has intentionally changed the valid value. In contrast, in the case where the predetermined value and the valid value are the same, it is impossible to distinguish between whether the user has intentionally set the same value or the user uses the predetermined value, which results in the same value.

Fig. 8B illustrates an example of a change in the setting values when the controller software 300 is updated. With the update of the controller software 300, an automatic restoration function is newly added, and a setting item of "AUTOMATIC RESTORATION" is added accordingly. A "VALID VALUE" is determined based on setting values before the update of the controller software 300 and setting values after the update of the controller software 300. The setting values before the update of the controller software 300 are, in particular, valid values, that is, valid values in Fig. 8A. The setting values after the update of the controller software 300 are, in particular, predetermined values, that is, predetermined values in Fig. 8B. The description herein is provided of an example in which the "VALID VALUE" is determined to be set to "ON". Details of a determination method will be described below.

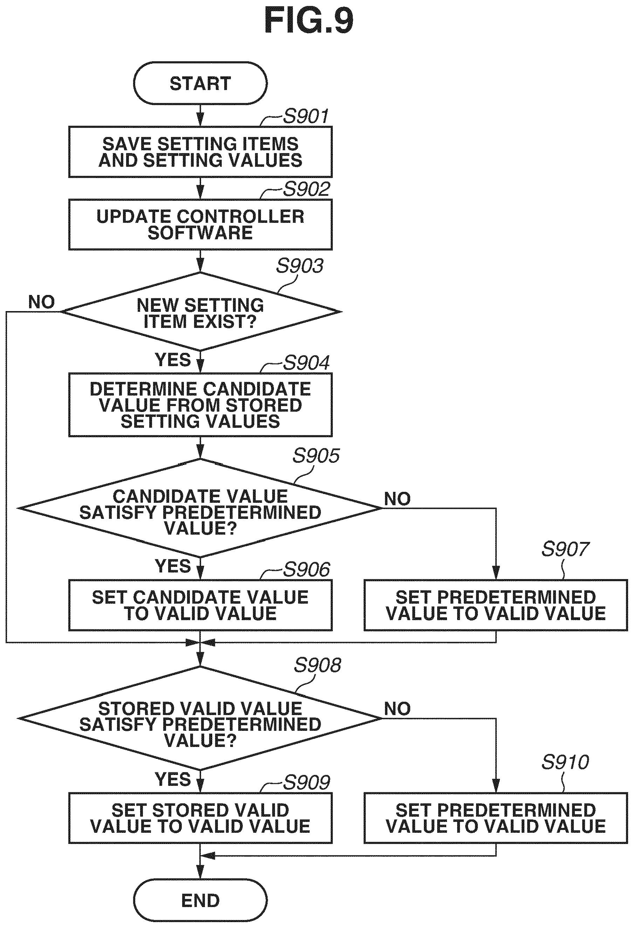

The determination processing of determining setting values of the MFP 100 at the time of the update of the controller software 300 will be described with reference to Fig. 9.

In step S901, the data storage unit 302 saves current setting values for each setting item prior to the update of the controller software 300.

In step S902, the software update unit 311 updates the controller software 300. The software update unit 311 updates the setting items, the support values, and the predetermined values together with the controller software 300. The authentication unit 310 may be used to check whether the operator is the administrator, and thereafter the update processing may be executed.

In step S903, the security setting determination unit 312 determines whether there is a setting item newly added as a result of the update in step S902. If the security setting determination unit 312 determines that there is the newly added setting item (YES in step S903), the processing proceeds to step S904. If the security setting determination unit 312 determines that there is no newly added setting item (NO in step S903), the processing proceeds to step S908.

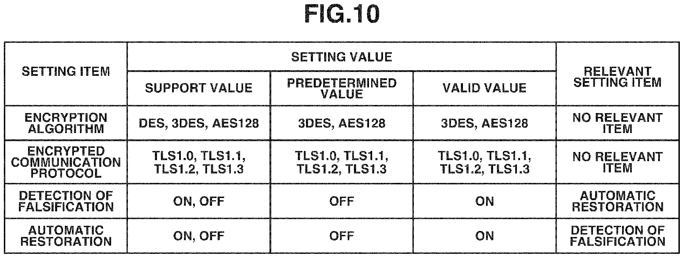

In step S904, the security setting determination unit 312 determines a candidate value of the newly added setting item from the setting values stored in step S901. There is a case where the candidate value is determined from a plurality of stored setting values, and there is a case where the candidate value is determined from a single stored setting value. An example of a method of determining the candidate value is described with reference to Fig. 10. In Fig. 10, assume that the setting item of "AUTOMATIC RESTORATION" is newly added, and a relevant setting item is set for each setting item. The relevant setting item has three types of values of no relevant item, a single relevant item, and a plurality of relevant items, and indicates a setting item having an equivalent setting value. The security setting determination unit 312 refers to the relevant setting item of the newly added setting item to determine the candidate value of the setting item based on valid values of the referred setting item. In the example of Fig. 10, the security setting determination unit 312 identifies "DETECTION OF FALSIFICATION", which is the relevant setting item of the newly added setting item "AUTOMATIC RESTORATION" and refers to the valid value of the setting item "DETECTION OF FALSIFICATION". Since the valid value is set to "ON", the candidate value of "AUTOMATIC RESTORATION" of the setting item is determined to be "ON".

Since the single setting item is identified as the relevant setting item in this example, the valid value of the relevant setting item is referred to as it is, and set to the candidate value. In contrast, in a case where a plurality of setting items is identified as the relevant setting items, it is possible to determine a selection method from a plurality of selection options, such as selection of the candidate value by a majority vote, and selection of the candidate value that can be determined to provide the highest level of safety in terms of security.

In step S905, the security setting determination unit 312 determines whether the candidate value determined in step S904 satisfies a predetermined value. The security setting determination unit 312 determines that the candidate value "satisfies" the predetermined value in a case where it is determined that setting the candidate value can achieve an equivalent or higher level of safety in terms of security than in a case of setting the predetermined value. The security setting determination unit 312 determines that the candidate value "does not satisfy" the predetermined value in a case where it is determined that setting the candidate value merely achieves a low level of safety. The determination about whether the level of safety is high or low is made based on whether the security function is enabled or disabled, by reference made to a defined value ranked in another table or the like. If the candidate value satisfies the predetermined value (YES in step S905), the processing proceeds to step S906. If the candidate value does not satisfy the predetermined value (NO in step S905), the processing proceeds to step S907.

In step S906, the security setting determination unit 312 sets the candidate value determined in step S904 to the valid value. In step S907, the security setting determination unit 312 sets the predetermined value to the valid value. The operations from steps S903 to S907 are repeated, and the valid value is determined for each of newly added setting items.

In step S908, the security setting determination unit 312 determines whether a stored valid value satisfies the predetermined value for an unset setting item, or a setting which is present before the update of the controller software 300. The security setting determination unit 312 determines that the stored valid value "satisfies" the predetermined value in a case where it is determined that setting the stored valid value can achieve an equivalent or higher level of safety in terms of security than in the case of setting the predetermined value. The security setting determination unit 312 determines that the stored valid value "does not satisfy" the predetermined value in a case where it is determined that setting the stored valid value merely achieves a low level of safety. If the stored valid value satisfies the predetermined value (YES in step S908), the processing proceeds to step S909. If the stored valid value does not satisfy the predetermined value (NO in step S908), the processing proceeds to step S910.

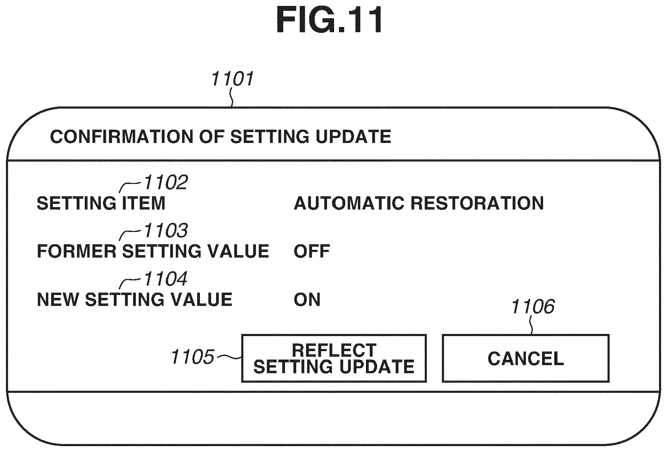

In step S909, the security setting determination unit 312 sets the stored valid value to the valid value. In step S910, the security setting determination unit 312 sets the predetermined value to the valid value. The operations from steps S908 to S910 are repeated, and the valid value is determined for each of the unset setting items. In the determination of the valid value, the valid value may be set after the user checks the valid value. For example, as shown in Fig. 11, new and old valid values may be displayed side by side to leave determination about the reflection of the setting values on the user. Fig. 11 is a confirmation screen 1101 on which the update of the settings is confirmed. Prior to update processing of updating settings of the MFP 100, the confirmation screen 1101 displays a list of a setting item 1102, a former setting value 1103 before the update as the old setting value, and a new setting value 1104 after the update as the new setting value, to prompt the user to confirm the update of the setting value. Although not shown in Fig. 11, the determination of the user may be supported by presentation of a basis for selection of the new valid value together, leaving the determination on the user.

The foregoing configuration enables determination of appropriate setting values in a case where a change is made to specifications and/or a function with the update of software and a setting item is added.

The description has been provided of Fig. 10 as an example of the method of determining the candidate value from the stored setting values. With reference to Fig. 10, the description has been provided of the method of preliminarily holding the relevance of the setting item and determining the candidate value from the valid values of the setting item of which relevance is indicated. The method of determining the candidate value is not limited thereto.

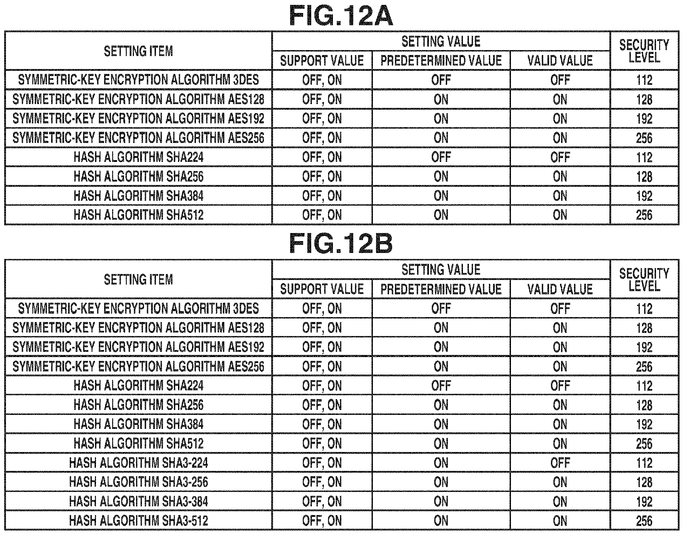

Another method is now described with reference to Figs. 12A and 12B.

Figs. 12A and 12B each illustrate the encryption algorithm as the setting item. In addition to the setting values including the support value, the predetermined value, and the valid value, as in Figs. 8A and 8B, a table indicating a security level is used. The security level is an index literally indicating a security level of the setting item. The security strength of a symmetric-key encryption algorithm, a hash algorithm, and the like is defined by National Institute of Standards and Technology Special Publication (NIST SP800-57). The security strength can be regarded as the security level. For example, since the security strength of a symmetric-key encryption algorithm 3DES is 112 as indicated in Fig. 12A, the security level can be regarded as 112. Since the security strength of a symmetric-key encryption algorithm AES128 is 128, the security strength can be regarded as 128. In this case, as the value becomes larger, the security level becomes higher. As the value becomes smaller, the security level becomes lower. The security level is determined based on the specifications and/or the function, and thus is preliminarily defined at the time of the update of software as with the support value and the predetermined value.

Fig. 12A illustrates the setting values before the update of software. A consideration is given to a case where new hash algorithms SHA3-244/256/384/512 are added by the update of software. As illustrated in Fig. 12B, a consideration is given to a case where setting items of "HASH ALGORITHM SHA3-244/256/384/512" are added. With reference to Fig. 12A, it is found that the valid value of the security level of 112 is "OFF", and the valid value of the security level of 128/192/256 is "ON". Hence, for the added setting items of "HASH ALGORITHM SHA3-224/256/384/512" in Fig. 12B, the candidate value of the setting item of "HASH ALGORITHM SHA3-224" having a security level 112 is "OFF". The candidate value of the setting items of "HASH ALGORITHM SHA3-256/384/512" having a security level higher than 112 is determined to be "ON".

As described above, it is also possible to set the security level for each setting item and determine the setting values for the newly added setting item based on the security level.

The description has been provided of the method of determining the valid value for the setting item that is present before the update of the controller software 300 in steps S908, S909, and S910. However, the method of determining the valid value is not limited thereto. For example, in a case where a stored predetermined value is compared to a stored valid value and a mismatch is detected, it can be assumed that the user has intentionally changed the predetermined value to the valid value. Thus, for the stored valid value that can be assumed to have been intentionally changed by the user, the stored valid value may be used, without change, as the valid value with respect for the user's intention. Further, it is determined that whether the stored valid value satisfies a new predetermined value. If the stored valid value satisfies the new predetermined value, the stored valid value is set as the valid value. If the stored valid value does not satisfy the new predetermined value, the user may be prompted to confirm that the stored valid value is set to the valid value as illustrated in Fig. 11. If confirmed, the stored valid value may be set to the valid value. If not confirmed, the predetermined value may be set to the valid value.

A second embodiment of the present invention will be described below with reference to the accompanying drawings. In the first embodiment, the description has been provided of the case where the change is made to the specifications and/or the function with the update of software and the setting item is added. In the present embodiment, a description will be provided of a case where the change is made to the specifications and/or the function with the update of software, but the setting items are not changed and the support value and the predetermined value are changed.

In the present embodiment, a connection mode, a physical configuration, and a software configuration are similar to those in the first embodiment.

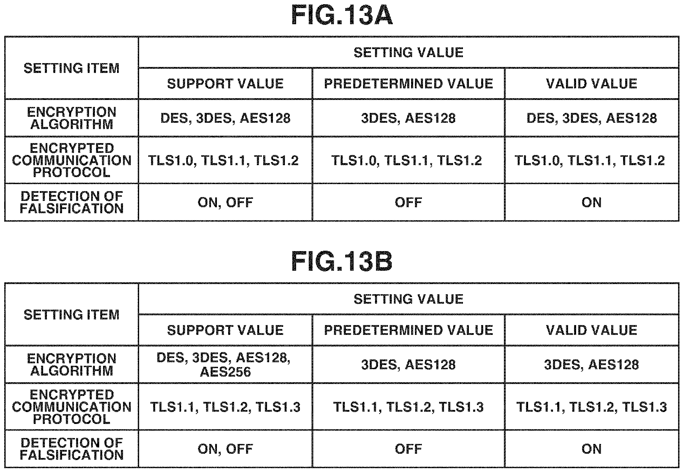

Figs. 13A and 13B each illustrate an example of setting items and setting values. As in the first embodiment, a setting item and setting values are in association with each other, and can be indicated in a table as illustrated in Figs. 13A and 13B. Figs. 13A and 13B each illustrate an example of a change in the setting values when the controller software 300 is updated. Fig. 13A illustrates the setting values before the update, and Fig. 13B illustrates the setting values after the update. With the update of the controller software 300, an AES256 function is newly added. In response, "AES256" is added to "SUPPORT VALUE" of the setting item "ENCRYPTION ALGORITHM". With the update of the controller software 300, a TLS1.0 function is deleted and a TLS1.3 function is newly added. In response, "TLS1.0" is deleted from "SUPPORT VALUE" of the setting value "ENCRYPTED COMMUNICATION PROTOCOL", and "TLS1.3" is added to "SUPPORT VALUE" of the setting value "ENCRYPTED COMMUNICATION PROTOCOL". There is a case where "PREDETERMINED VALUE" is updated similarly to "SUPPORT VALUE", as with the setting item "ENCRYPTED COMMUNICATION PROTOCOL", and there is a case where "PREDETERMINED VALUE" is updated to be different from "SUPPORT VALUE", as with the setting item "ENCRYPTION ALGORITHM". The "VALID VALUE" after the update of the controller software 300 is determined by using setting values before the update of the controller software 300 and setting values after the update of the controller software 300. The setting values before the update of the controller software 300 indicates, in particular, the valid values, that is, the valid values in Fig. 13A. The setting values after the update of the controller software 300 indicates, in particular, the predetermined values, that is, the predetermined values in Fig. 13B. Details of a determination method will be described below.

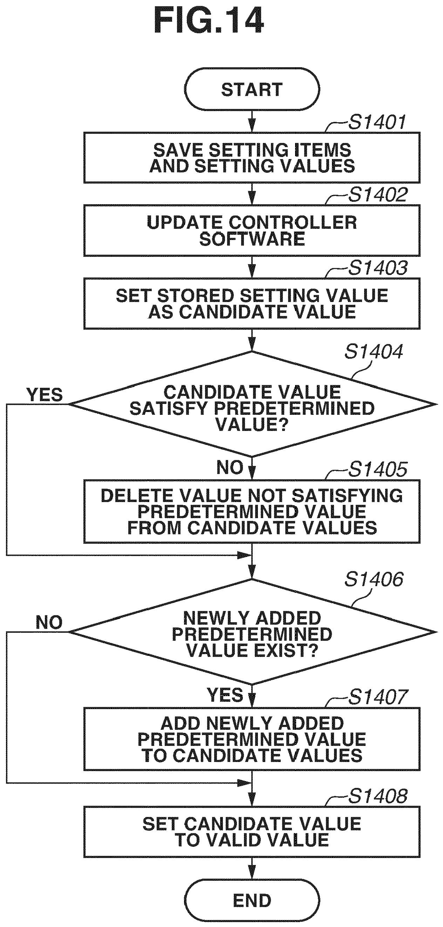

The determination processing of determining setting values of the MFP 100 at the time of the update of the controller software 300 in the present embodiment is now described with reference to Fig. 14.

In step S1401, the data storage unit 302 saves setting values for each setting item prior to the update of the controller software 300.

In step S1402, the software update unit 311 updates the controller software 300.

The software update unit 311 updates setting items, support values, and predetermined values together with the controller software 300.

In step S1403, the security setting determination unit 312 determines a valid value stored in step S1401 to be a candidate value.

In step S1404, the security setting determination unit 312 determines whether the candidate value determined in step S1403 satisfies a predetermined value. The security setting determination unit 312 determines that the candidate value "satisfies" the predetermined value in a case where it is determined that setting the candidate value achieves an equivalent or higher level of safety in terms of security than in a case of setting the predetermined value. The security setting determination unit 312 determines that the candidate value "does not satisfy" the predetermined value in a case where it is determined that setting the candidate value merely achieves a low level of safety. If the candidate value satisfies the predetermined value (YES in step S1404), the processing proceeds to step S1406. If the candidate value does not satisfy the predetermined value (NO in step S1404), the processing proceeds to step S1405.

In step S1405, the security setting determination unit 312 eliminates a candidate value determined to not satisfy the predetermined value in step S1404 from candidate values. This operation implements elimination of the setting items for which candidate value does not satisfy the predetermined value.

In step S1406, the security setting determination unit 312 determines whether there is a predetermined value newly added before and after the update of the controller software 300. If there is the predetermined value (YES in step S1406), the processing proceeds to step S1407. If there is no predetermined value (NO in step S1406), the processing proceeds to step S1408.

In step S1407, the security setting determination unit 312 adds the predetermined value determined to be added in step S1406 to the candidate values. This operation implements the candidate values including the new predetermined value.

In step S1408, the security setting determination unit 312 sets the candidate value to the valid value. The operations from steps S1402 to S1408 are repeated and the valid value is determined for each of the setting items.

The foregoing configuration enables determination of appropriate setting values in a case where a change is made to specifications and/or a function with the update of software but no change is made to setting items and a change is made to support values and predetermined values.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to embodiments, it is to be understood that the invention is not limited to the disclosed embodiments. The scope of the following claims is to be accorded the broadest interpretation so as to encompass all such modifications and equivalent structures and functions.

## Claims

1. An information processing apparatus (100), comprising:
a storage means (302) for storing a setting value for each of a plurality of security setting items;
an update means (311) for performing update processing on software (300) stored in the information processing apparatus; and
a determination means (312) for determining a setting value of a setting item that is newly added or changed in a specification of the software through the update processing, based on the setting values stored in the storage means (302).

2. The information processing apparatus (100) according to claim 1, wherein the determination means (312) determines the setting value of the setting item that is newly added or changed in specification through the update processing, based on a relevance to each setting item.

3. The information processing apparatus (100) according to claim 1, wherein the determination means (312) determines the setting value of the setting item that is newly added or changed in specification through the update processing, based on a security level of the setting values stored in the storage means (302).

4. The information processing apparatus (100) according to claim 1, further comprising a change means (312) for changing the setting values stored in the storage means (302), based on the specification or a function changed through the update processing.

5. The information processing apparatus (100) according to claim 4, wherein the change means (312) adds a new setting value to the setting values stored in the storage means (302), based on the specification or the function changed through the update processing.

6. An information processing method, comprising:
storing (S901) a setting value for each of a plurality of security setting items;
performing (S902) update processing on software; and
determining (S904) a setting value of a setting item that is newly added or changed in a specification through the update processing on the software, based on the stored setting values.

7. A non-transitory storage medium storing a program that when executed on an information processing apparatus causes the information processing apparatus to execute the method according to claim 6.
